# EUROPÄISCHE PATENTSCHRIFT

(11) **EP 4 438 915 B1**
(45) Veröffentlichungstag und Bekanntmachung des Hinweises auf die Patenterteilung: **09.09.2026**
(21) Anmeldenummer: 21965220.3
(22) Anmeldetag: 26.11.2021
(51) Int. Cl.: F16C 35/073, F16C 35/078

(54) **MONTAGE- UND DEMONTAGEANORDNUNG, WELLE UND LAGERANORDNUNG, MONTAGEVERFAHREN UND DEMONTAGEVERFAHREN**
MOUNTING AND DISASSEMBLING ASSEMBLY, SHAFT AND BEARING ASSEMBLY, MOUNTING METHOD, AND DISASSEMBLING METHOD
ENSEMBLE DE MONTAGE ET DE DÉMONTAGE, ENSEMBLE ARBRE ET PALIER, PROCÉDÉ DE MONTAGE ET PROCÉDÉ DE DÉMONTAGE

(43) Veröffentlichungstag der Anmeldung: 02.10.2024
(73) Patentinhaber: Schaeffler Technologies AG & Co. KG, 91074 Herzogenaurach (DE)
(72) Erfinder: ZIMMERMANN, Klaus, 97723 Oberthulba (DE); DITTRICH, Thomas, 97762 Hammelburg (DE); HAN, Huimin, Taicang, Jiangsu 215400 (CN)
(74) Vertreter: Schaeffler Technologies
(86) Internationale Anmeldenummer: PCT/CN2021/133655
(87) Internationale Veröffentlichungsnummer: WO 2023/092486

(56) Entgegenhaltungen:
- EP-B1- 0 156 104
- WO-A1-2018/017030
- CN-A- 109 590 713
- CN-A- 111 633 606
- CN-A- 112 805 481
- CN-U- 209 621 853
- CN-Y- 201 129 366
- DE-A1- 10 161 066
- DE-C1- 4 211 365
- JP-B1- 6 650 155
- JP-B1- 6 650 155
- US-A1- 2006 093 251
- US-A1- 2006 093 251

## Beschreibung

### Technisches Gebiet

Die vorliegende Anmeldung bezieht sich auf das Gebiet der Montage und Demontage von Wellen und Lagern, insbesondere auf eine Montage- und Demontageeinheit und eine Wellen- und Lagereinheit, die die Montage- und Demontageeinheit einschließt. Außerdem werden ein Montageverfahren zum Montieren eines Lagers auf einer Welle unter Verwendung der Montage- und Demontageeinheit und ein Demontageverfahren zum Demontieren des Lagers von der Welle unter Verwendung derselben bereitgestellt.

### Hintergrund

Im Stand der Technik werden Lager wie Axiallager während des Gebrauchs üblicherweise direkt auf eine Welle montiert. Das Verfahren zur direkten Montage der Lager auf der Welle bringt jedoch die folgenden Probleme mit sich.

Einerseits kann die mechanische Kraft bei der Montage des Lagers mit dem vorstehenden Verfahren über ein Wälzelement des Lagers übertragen werden. Dadurch können die Laufbahnen des Innen- und Außenrings beschädigt werden, was zu einer kürzeren Lebensdauer des Lagers führt. Andererseits ist die Demontage relativ schwierig, wenn es darum geht, das Lager von der Welle zu demontieren. Daher besteht ein dringender Bedarf an einer Möglichkeit, eine Beschädigung des Lagers während der Montage zu verhindern und die Demontage zu erleichtern.

CN 112 805 481 A und EP 0 156 104 B1 zeigen unterschiedliche Montage- und Demontageeinheiten.

### Kurzdarstellung

Die vorliegende Anmeldung zielt auf die Behebung der vorstehenden Mängel des Standes der Technik ab. Eine Aufgabe der vorliegenden Anmeldung besteht darin, eine neuartige Montage- und Demontageeinheit bereitzustellen, die nicht nur eine Beschädigung des Lagers während der Montage verhindern kann, sondern auch die Demontage des Lagers erleichtert. Eine weitere Aufgabe der vorliegenden Erfindung besteht darin, eine Wellen- und Lagereinheit bereitzustellen, die die vorstehende Montage- und Demontageeinheit einschließt. Eine weitere Aufgabe der vorliegenden Anmeldung besteht darin, ein Montageverfahren zum Montieren eines Lagers unter Verwendung der vorstehenden Montage- und Demontageeinheit und ein Demontageverfahren zum Demontieren des Lagers unter Verwendung derselben bereitzustellen.

Um die vorstehenden Aufgaben der Erfindung zu erreichen, werden in der vorliegenden Anmeldung die nachfolgenden technischen Lösungen angewandt.

Die vorliegende Anmeldung stellt eine Montage- und Demontageeinheit zum Montieren eines Lagers auf und Demontieren desselben von einer Welle bereit, wobei die Einheit Folgendes umfasst:
eine Außenhülse, wobei eine Außenumfangsfläche der Außenhülse mit einer ersten Montagefläche zur Montage des Lagers ausgebildet ist; und eine Innenumfangsfläche davon mit einer ersten konischen Oberfläche, die sich zu einem axialen Ende der Außenhülse in der axialen Richtung der Montage- und Demontageeinheit erstreckt, während sie sich radial nach außen erstreckt;
eine Innenhülse, wobei eine Innenumfangsfläche der Innenhülse mit einer zweiten Montagefläche zur Montage auf der Welle ausgebildet ist; und eine Außenumfangsfläche davon mit einer zweiten konischen Oberfläche und einem Gewindeabschnitt, der sich an einer axialen Endseite der zweiten konischen Oberfläche befindet; wobei sich die zweite konische Oberfläche in axialer Richtung zum anderen axialen Ende der Innenhülse erstreckt, während sie sich vom Gewindeabschnitt radial nach innen erstreckt; und wenn sich die zweite konische Oberfläche radial innerhalb der ersten konischen Oberfläche befindet und mit dieser in Kontakt steht, sich die Innenhülse und die Außenhülse relativ zueinander in axialer Richtung bewegen können; und
einen Stützring, der mit dem Gewindeabschnitt verschraubt ist, wobei sich der Stützring und die Innenhülse relativ zueinander in axialer Richtung bewegen können, während die Schraubverbindung aufrechterhalten wird.

Bei einer alternativen Lösung umfasst die Montage- und Demontageeinheit außerdem eine Sicherungsmutter, die mit der Welle verschraubt ist, um die axiale Position der Außenhülse relativ zur Welle am anderen axialen Ende der Außenhülse zu definieren.

Bei einer anderen alternativen Lösung umfasst die Montage- und Demontageeinheit außerdem Sicherungsbolzen.

Die Innenumfangsfläche der Sicherungsmutter ist mit einer Ringnut ausgebildet, die sich entlang des Umfangs der Montage- und Demontageeinheit erstreckt. Wenn die Montage- und Demontageeinheit auf der Welle montiert ist, liegt die Sicherungsmutter an der Außenhülse an.

Die Sicherungsmutter ist mit Montagelöchern ausgebildet, die sich in axialer Richtung durch die Ringnut erstrecken. Die Sicherungsbolzen werden in den Montagelöchern befestigt, um die axiale Position der Sicherungsmutter relativ zur Welle zu fixieren.

Bei einer anderen alternativen Lösung ist die Außenhülse mit einer ersten Stufenstruktur ausgebildet, deren Bodenfläche die erste Montagefläche ist. Die erste Stufenstruktur und der Stützring definieren die axiale Position des Lagers.

Bei einer anderen alternativen Lösung ist der Stützring mit einer zweiten Stufenstruktur ausgebildet, deren Bodenfläche eine dritte Montagefläche zum Stützen des Lagers ist.

Bei einer anderen alternativen Lösung ist eine innere Ölnut, die sich radial nach innen öffnet, auf der ersten konischen Oberfläche der Außenhülse ausgebildet, und ein Ölversorgungskanal, der mit der inneren Ölnut in Verbindung steht, ist ebenfalls innerhalb der Außenhülse ausgebildet.

Bei einer anderen alternativen Lösung umfasst die innere Ölnut eine Umfangsölnut und eine Vielzahl von axialen Ölnuten, die entlang des Umfangs der Montage- und Demontageeinheit beabstandet sind und sich jeweils in axialer Richtung erstrecken.

Die Umfangsölnut erstreckt sich kontinuierlich entlang des Umfangs und steht mit jeder der axialen Ölnuten in Verbindung.

Bei einer weiteren alternativen Lösung ist die Innenhülse mit einer Vielzahl von Nuten auf der zweiten Montagefläche ausgebildet, die entlang des Umfangs der Montage- und Demontageeinheit voneinander beabstandet sind, sich jeweils radial nach innen öffnen und sich in axialer Richtung erstrecken.

Bei einer anderen alternativen Lösung ist der Stützring mit Montagelöchern ausgebildet, die sich in axialer Richtung durch diesen hindurch erstrecken und einer axialen Endfläche der Innenhülse zugewandt sind.

Die Montage- und Demontageeinheit umfasst außerdem Befestigungselemente, die durch die Montagelöcher verlaufen und an der axialen Endfläche der Innenhülse anliegen, sodass die Innenhülse und der Stützring relativ zueinander fixiert sind.

Bei einer weiteren alternativen Lösung ist die Außenhülse mit ersten Demontagelöchern ausgebildet, die sich in axialer Richtung erstrecken; und die Sicherungsmutter mit zweiten Demontagelöchern, die sich in axialer Richtung durch diese hindurch erstrecken und mit den ersten Demontagelöchern übereinstimmen. Die zweiten Demontagelöcher können mit den ersten Demontagelöchern ausgerichtet werden, indem die Sicherungsmutter relativ zur Welle gedreht wird.

Bei einer anderen alternativen Lösung ist der Stützring mit dritten Demontagelöchern ausgebildet, die sich in axialer Richtung erstrecken, und die zweiten Demontagelöcher können mit den dritten Demontagelöchern ausgerichtet werden, indem die Sicherungsmutter relativ zur Welle gedreht wird.

Die vorliegende Anmeldung stellt weiterhin eine Wellen- und Lagereinheit bereit, die Folgendes umfasst: eine Welle, ein Lager und die Montage- und Demontageeinheit, wie bei einer der vorstehen genannten technischen Lösungen beschrieben. Die Außenhülse, die Innenhülse und der Stützring der Montage- und Demontageeinheit befinden sich zumindest teilweise zwischen der Welle und dem Lager, und die Montage und Demontage des Lagers auf/von der Welle erfolgt über die Montage- und Demontageeinheit.

Bei einer alternativen Lösung ist im Inneren der Welle ein Wellenölversorgungskanal ausgebildet, wobei ein Ölauslass in der Außenumfangsfläche der Welle angeordnet ist und der zweiten Montagefläche der Innenhülse zugewandt ist.

Bei einer anderen alternativen Lösung ist die Welle mit einer Schulter ausgebildet, die am Stützring anliegt, um die Montage- und Demontageeinheit axial zu begrenzen.

Die vorliegende Anmeldung stellt weiterhin ein Montageverfahren zur Montage eines angetriebenen Lagers auf einer Welle unter Verwendung der bei einer der vorstehen genannten technischen Lösungen beschriebenen Montage- und Demontageeinheit bereit, wobei das Verfahren die folgenden Schritte umfasst:
Befestigen des Lagers auf einer ersten Montagefläche der Außenhülse in einer ineinandergesteckten Weise, sodass es an einer ersten Stufenstruktur der Außenhülse anliegt;
Einsetzen der Innenhülse in die Außenhülse, sodass die zweite konische Oberfläche mit der ersten konischen Oberfläche in Kontakt steht;
Schraubverbinden des Stützrings mit der Innenhülse, Einstellen der Schraubverbindungslänge des Stützrings und der Innenhülse, um einen vorbestimmten axialen Spalt zwischen dem Lager und der axialen Stützring-Begrenzungsfläche des Stützrings zu erhalten, und anschließendes Fixieren des Stützrings und der Innenhülse;
Befestigen der aus der Außenhülse, der Innenhülse, dem Stützring und dem Lager bestehenden Einheit auf der Welle in einer ineinandergesteckten Weise, sodass der Stützring an der Schulter der Welle anliegt; und
Drücken der Außenhülse, sodass sich die Außenhülse und das Lager relativ zur Innenhülse in axialer Richtung bewegen und schließlich das Lager an der axialen Begrenzungsfläche des Stützrings in axialer Richtung anliegt.

Bei einer alternativen Lösung wird beim Drücken der Außenhülse Hydrauliköl zwischen der ersten konischen Oberfläche und der zweiten konischen Oberfläche durch den Ölversorgungskanal der Außenhülse zugeführt.

Bei einer anderen alternativen Lösung wird, nachdem das Lager schließlich an der axialen Begrenzungsfläche des Stützrings in axialer Richtung anliegt, die Sicherungsmutter der Montage- und Demontageeinheit auf der Welle gegen die Außenhülse montiert.

Die vorliegende Anmeldung stellt weiterhin ein Demontageverfahren zum Demontieren eines Lagers von einer Welle unter Verwendung der bei einigen der vorstehenden Lösungen beschriebenen Montage- und Demontageeinheit bereit, wobei das Verfahren die folgenden Schritte umfasst:
Wenn dem Ölversorgungskanal Hydrauliköl zugeführt wird, wird die Außenhülse von der Innenhülse getrennt und von der Welle demontiert.

Die vorliegende Anmeldung stellt weiterhin ein Demontageverfahren zum Demontieren eines Lagers von einer Welle unter Verwendung der bei einer der vorstehen genannten technischen Lösungen beschriebenen Montage- und Demontageeinheit bereit, wobei das Verfahren die folgenden Schritte umfasst:
Demontieren der Außenhülse und des Lagers von der Welle unter Verwendung einer Schraube, die durch eine an der Welle befestigte Sicherungsmutter oder eine an der Welle anliegende Demontageplatte verläuft und in die ersten Demontagelöcher der Außenhülse eingeschraubt wird; und
anschließend Demontieren der Innenhülse von der Welle unter Verwendung einer Schraube, die durch die Sicherungsmutter oder die Demontageplatte verläuft und in die dritten Demontagelöcher des Stützrings eingeschraubt wird.

Bei einer alternativen Lösung wird während der Demontage der Innenhülse von der Welle Hydrauliköl zwischen der Welle und der Innenhülse durch den Wellenölversorgungskanal der Welle zugeführt.

Mit der vorstehend genannten technischen Lösung stellt die vorliegende Anmeldung eine neuartige Montage- und Demontageeinheit zum Montieren und Demontieren des Lagers auf/von der Welle bereit. Die Montage- und Demontageeinheit schließt eine Außenhülse, eine Innenhülse und einen Stützring ein. Die Außenumfangsfläche der Außenhülse ist mit einer ersten Montagefläche zur Montage des Lagers ausgebildet; und eine Innenumfangsfläche davon mit einer ersten konischen Oberfläche, die sich zu einem axialen Ende der Außenhülse in der axialen Richtung der Montage- und Demontageeinheit erstreckt, während sie sich radial nach außen erstreckt. Die Innenumfangsfläche der Innenhülse ist mit einer zweiten Montagefläche zur Montage auf der Welle ausgebildet; und eine Außenumfangsfläche davon mit einer zweiten konischen Oberfläche und einem Gewindeabschnitt, der sich an einer axialen Endseite der zweiten konischen Oberfläche befindet. Die zweite konische Oberfläche erstreckt sich in axialer Richtung zum anderen axialen Ende der Innenhülse, während sie sich vom Gewindeabschnitt radial nach innen erstreckt. Wenn sich die zweite konische Oberfläche radial innerhalb der ersten konischen Oberfläche befindet und mit dieser in Kontakt steht, können sich die Innenhülse und die Außenhülse relativ zueinander in axialer Richtung bewegen. Der Stützring ist mit dem Gewindeabschnitt verschraubt, und der Stützring und die Innenhülse können sich relativ zueinander in axialer Richtung bewegen, während die Schraubverbindung aufrechterhalten bleibt.

Die Montage des Lagers auf der Welle erfolgt somit durch Vormontieren des Lagers auf der Außenhülse und Aufschieben der ersten konischen Oberfläche der Außenhülse auf die zweite konische Oberfläche der Innenhülse. Dadurch wird bei der Montage vermieden, dass die Laufbahnen des Innen- und Außenrings des Lagers durch die im Hintergrund beschriebene mechanische Kraftübertragung durch den Wälzkörper beschädigt werden. Darüber hinaus ist die Demontage bei Bedarf einfach, da die erste konische Oberfläche der Außenhülse auf der zweiten konischen Oberfläche der Innenhülse gleitet.

### Kurzbeschreibung der Zeichnungen

FIG. 1A ist eine perspektivische Ansicht, die den Aufbau einer Montage- und Demontageeinheit gemäß einer Ausführungsform der vorliegenden Anmeldung zeigt.
FIG. 1B ist eine perspektivische Ansicht, die den Aufbau einer Außenhülse der Montage- und Demontageeinheit aus FIG. 1A zeigt.
FIG. 1C ist eine perspektivische Ansicht, die den Aufbau einer Innenhülse der Montage- und Demontageeinheit aus FIG. 1A zeigt.
FIG. 1D ist eine perspektivische Ansicht, die den Aufbau eines Stützrings der Montage- und Demontageeinheit aus FIG. 1A zeigt.
FIG. 1E ist eine perspektivische Ansicht, die den Aufbau einer Sicherungsmutter der Montage- und Demontageeinheit aus FIG. 1A zeigt.
FIG. 2A bis 2F sind schematische Darstellungen, die ein Montageverfahren zum Montieren eines Lagers unter Verwendung der Montage- und Demontageeinheit gemäß einer Ausführungsform der vorliegenden Anmeldung veranschaulichen.
FIG. 3A und 3B sind schematische Darstellungen, die ein Demontageverfahren zum Demontieren eines Lagers unter Verwendung der Montage- und Demontageeinheit gemäß einer Ausführungsform der vorliegenden Anmeldung veranschaulichen.
FIG. 4A und 4B sind schematische Darstellungen, die ein weiteres Demontageverfahren zum Demontieren eines Lagers unter Verwendung der Montage- und Demontageeinheit gemäß einer Ausführungsform der vorliegenden Anmeldung veranschaulichen.

### Ausführliche Beschreibung

Nachstehend werden in Bezug auf die beigefügten Zeichnungen beispielhafte Ausführungsformen der vorliegenden Anmeldung beschrieben. Hierbei gilt zu beachten, dass diese spezifischen Beschreibungen lediglich dazu dienen, den Fachleuten auf dem Gebiet der Technik zu zeigen, wie die vorliegende Anmeldung umgesetzt werden kann, und nicht als vollständige Aufzählung aller möglichen Arten der vorliegenden Anmeldung noch als Einschränkung ihres Schutzumfangs gedacht sind.

Die Außenhülse, die Innenhülse, der Stützring und die Sicherungsmutter der Montage- und Demontageeinheit gemäß der vorliegenden Anmeldung sind alles rotierende Teile mit einer Mittelachse und werden koaxial montiert. In der vorliegenden Anmeldung beziehen sich "axial", "radial" und "Umfangs-", sofern nicht anders angegeben, jeweils auf die axiale und radiale Richtung und den Umfang der Montage- und Demontageeinheit im montierten Zustand. Darüber hinaus bezieht sich "radial innen" auf die Seite, die in radialer Richtung nahe an der Mittelachse der Montage- und Demontageeinheit liegt, und "radial außen" bezieht sich auf die Seite, die in radialer Richtung von der Mittelachse der Montage- und Demontageeinheit entfernt ist.

Der Aufbau der Montage- und Demontageeinheit gemäß einer Ausführungsform der vorliegenden Erfindung wird nachstehend unter Bezugnahme auf die beigefügten Zeichnungen der Beschreibung beschrieben.

### (Der Aufbau der Montage- und Demontageeinheit gemäß einer Ausführungsform der vorliegenden Anmeldung)

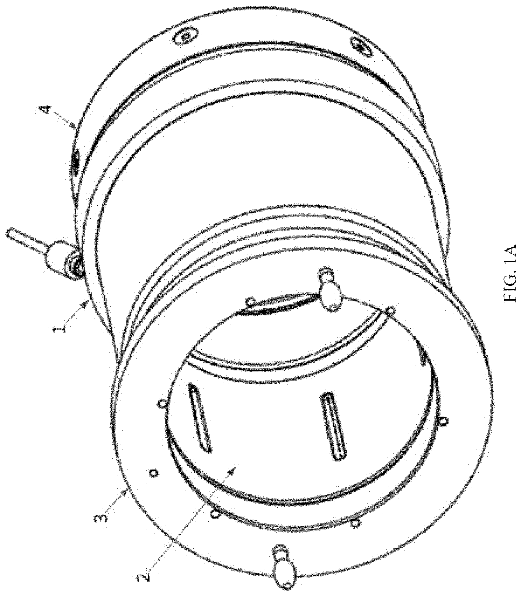

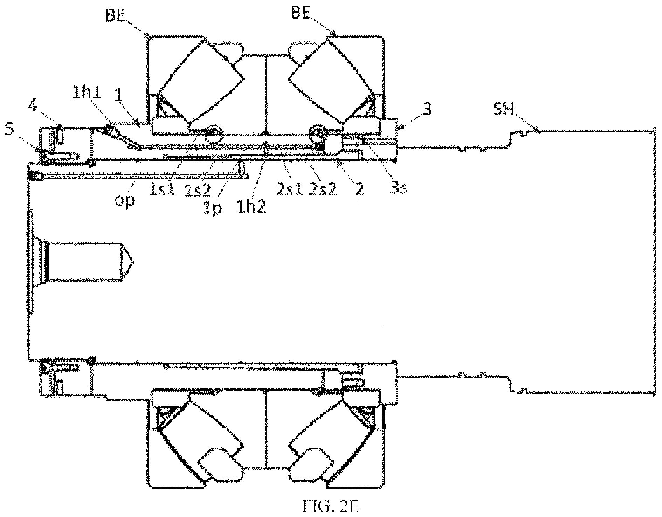

Die Montage- und Demontageeinheit gemäß einer Ausführungsform der vorliegenden Anmeldung dient zur Montage und Demontage eines Lagers BE auf/von einer Welle SH, wodurch verhindert wird, dass das Lager BE beschädigt wird, und gleichzeitig die Montage und Demontage erleichtert wird. Wie in FIG. 1A bis 1E gezeigt, umfasst die Montage- und Demontageeinheit gemäß einer Ausführungsform der vorliegenden Anmeldung eine Außenhülse 1, eine Innenhülse 2, einen Stützring 3, eine Sicherungsmutter 4 und einen bzw. mehrere Sicherungsbolzen 5 (siehe beispielsweise FIG. 2E).

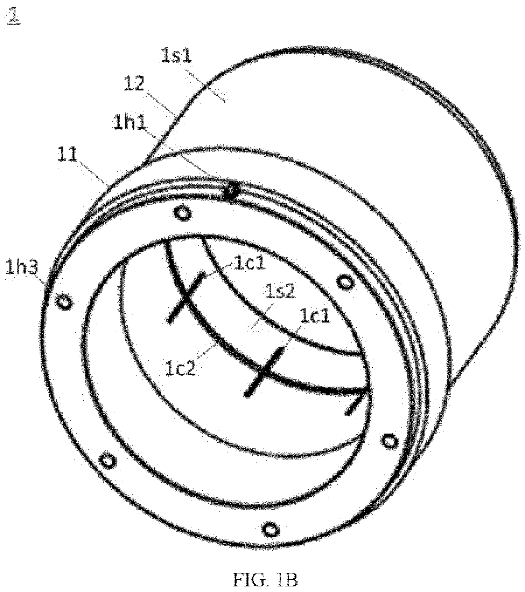

In der vorliegenden Ausführungsform ist, wie in FIG. 1A und 1B gezeigt, die Außenhülse 1 zylinderförmig. Die Außenhülse 1 schließt einen ersten Abschnitt mit großem Durchmesser 11 und einen ersten Abschnitt mit kleinem Durchmesser 12 ein, die miteinander verbunden sind. Der Außendurchmesser des ersten Abschnitts mit großem Durchmesser 11 ist größer als der des ersten Abschnitts mit kleinem Durchmesser 12. Somit wird der Außenumfang der Außenhülse 1 durch den ersten Abschnitt mit großem Durchmesser 11 und den ersten Abschnitt mit kleinem Durchmesser 12 mit einer ersten Stufenstruktur gebildet. Am ersten Abschnitt mit kleinem Durchmesser 12 ist die Außenumfangsfläche der Außenhülse 1 mit einer ersten zylindrischen Oberfläche 1s1 (ein Beispiel einer ersten Montagefläche) zum Montieren des Lagers BE ausgebildet, welche die Bodenfläche der ersten Stufenstruktur darstellt. Darüber hinaus ist am ersten Abschnitt mit kleinem Durchmesser 12 eine erste konische Oberfläche 1s2 auf der Innenumfangsfläche der Außenhülse 1 ausgebildet, die sich in der axialen Richtung A zu einem axialen Ende der Außenhülse 1 (dem ersten Abschnitt mit kleinem Durchmesser 12 oder dem Ende der Außenhülse 1, das vom ersten Abschnitt mit großem Durchmesser 11 abgewandt ist) erstreckt, während sie sich radial nach außen erstreckt. Das heißt, der Innendurchmesser des Abschnitts der Außenhülse 1, der der ersten konischen Oberfläche 1s2 entspricht, nimmt zum axialen Ende hin allmählich zu.

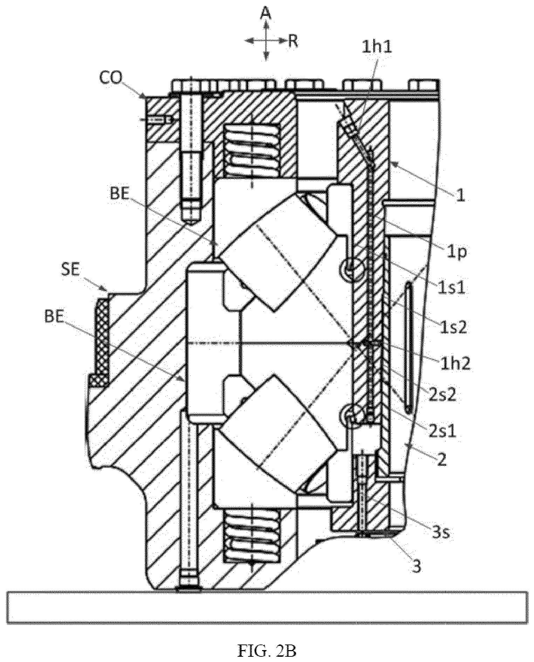

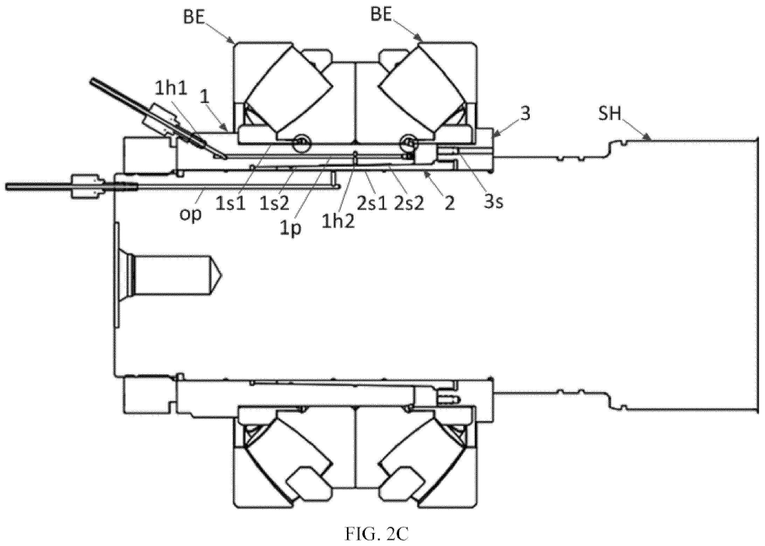

Darüber hinaus bewegen sich (gleiten) die Außenhülse 1 und die Innenhülse 2 relativ zueinander, wobei die erste konische Oberfläche 1s2 der Außenhülse 1 mit der darunter liegenden zweiten konischen Oberfläche 2s2 der Innenhülse 2 zusammenpasst. Somit ist die erste konische Oberfläche 1s2 der Außenhülse 1 mit einer inneren Ölnut ausgebildet, um ihre relative Bewegung zu erleichtern, wie in FIG. 1B gezeigt ist. Die innere Ölnut öffnet sich radial nach innen, ist aber in andere Richtungen abgeschlossen. Die innere Ölnut umfasst eine Vielzahl von axialen Ölnuten 1c1 und eine Umfangsölnut 1c2. Die Vielzahl von axialen Ölnuten 1c1, die entlang des Umfangs der Außenhülse 1 beabstandet sind, erstreckt sich jeweils (im Wesentlichen) entlang der axialen Richtung A. Die Umfangsölnuten 1c2 erstrecken sich kontinuierlich über den gesamten Umfang, um eine Verbindung zwischen der Vielzahl von axialen Ölnuten 1c1 zu ermöglichen. Wie in FIG. 1B, 2B, 2C und 2E dargestellt, ist auch innerhalb der Außenhülse 1 ein Ölversorgungskanal 1p ausgebildet, der mit der inneren Ölnut in Verbindung steht. Der Ölversorgungskanal 1p weist einen Öleinlass 1h1 am ersten Abschnitt mit großem Durchmesser 11 und einen Ölauslass 1h2 in der inneren Ölnut auf. Der Ölauslass 1h2 kann in der axialen Ölnut 1c1 oder der Umfangsölnut 1c2 angeordnet sein, vorzugsweise in der Nähe des Bereichs, in dem sie sich kreuzen. Der Ölversorgungskanal 1p kann einen axialen Kanal und einen radialen Kanal umfassen, die in Verbindung miteinander stehen. Es versteht sich, dass Gewinde, die mit einer Ölversorgungsleitung einer Ölversorgungsvorrichtung verbunden sind, an einem Abschnitt des Ölversorgungskanals 1p neben dem Öleinlass 1h1 ausgebildet sein können. So kann die Zufuhr von Hydrauliköl durch den Ölzufuhrkanal 1p Öldruck bereitstellen und einen Ölfilm zwischen der ersten konischen Oberfläche 1s2 und der zweiten konischen Oberfläche 2s2 bilden. Dies erleichtert die Relativbewegung zwischen der Außenhülse 1 und der Innenhülse 2 bei der Montage und Demontage.

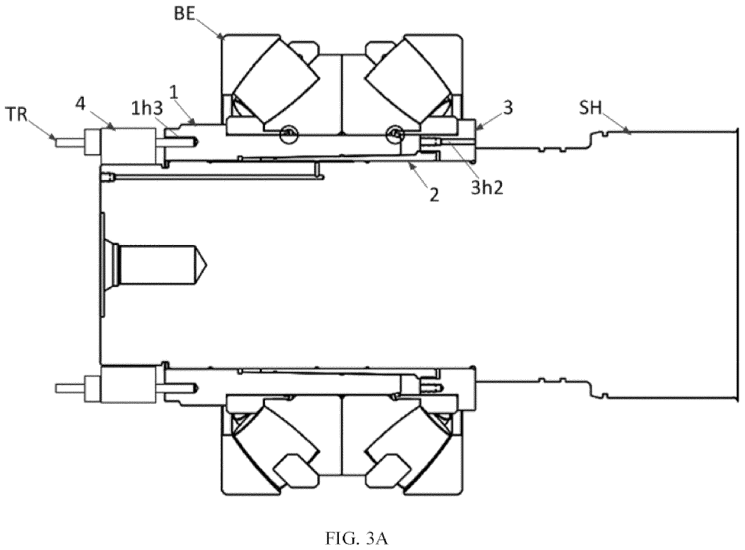

Zur einfachen Verbindung mit dem Demontagewerkzeug (unter Schraube TR in FIG. 3A) ist eine Vielzahl von ersten Demontagelöchern 1h3 an der Endfläche des anderen axialen Endes der Außenhülse 1 (dem ersten Abschnitt mit großem Durchmesser 11 oder dem Ende der Außenhülse 1, das vom ersten Abschnitt mit kleinem Durchmesser 12 abgewandt ist) ausgebildet, wie in FIG. 1B, 3A und 4A gezeigt. Die Vielzahl von ersten Demontagelöchern 1h3, die gleichmäßig entlang des Umfangs beabstandet sind, sind jeweils mit einem Innengewinde für eine Schraubverbindung mit dem Demontagewerkzeug ausgebildet. Durch Drehen der Sicherungsmutter 4 auf der Welle SH, um die darunter liegenden zweiten Demontagelöcher 4h2 der Sicherungsmutter 4 gegenüber den ersten Demontagelöchern 1h3 anzuordnen, wird das Demontagewerkzeug in den ersten und zweiten Demontagelöchern 1h3, 4h2 befestigt.

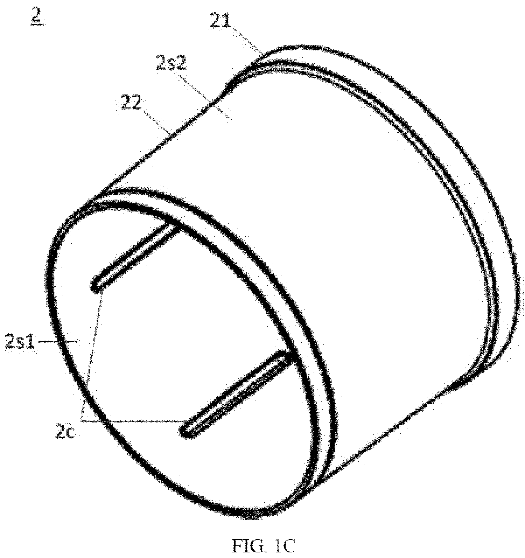

In der vorliegenden Ausführungsform ist die Innenhülse 2 zylinderförmig, wie in FIG. 1A und 1C dargestellt. Die Innenhülse 2 schließt einen Gewindeabschnitt 21 und einen verjüngten Abschnitt 22 ein, die miteinander verbunden sind. Der Gewindeabschnitt 21, der sich an einer axialen Endseite des verjüngten Abschnitts 22 befindet, weist einen Außendurchmesser auf, der größer ist als der maximale Außendurchmesser des verjüngten Abschnitts 22. Am Gewindeabschnitt 21 ist die Außenumfangsfläche der Innenhülse 2 mit einem Außengewinde zur Schraubverbindung mit dem Stützring 3 ausgebildet. Am verjüngten Abschnitt 22 bildet die Außenumfangsfläche der Innenhülse 2 eine zweite konische Oberfläche 2s2, die sich zum anderen axialen Ende der Innenhülse 2 (dem verjüngten Abschnitt oder dem Ende der Innenhülse 2, das vom Gewindeabschnitt 21 abgewandt ist) erstreckt, während sie sich vom Gewindeabschnitt 21 radial nach innen erstreckt. Das heißt, der Außendurchmesser des verjüngten Abschnitts 22 nimmt vom Gewindeabschnitt 21 zum anderen axialen Ende der Innenhülse 2 hin allmählich ab. Damit die zweite konische Oberfläche 2s2 der Innenhülse 2 und die erste konische Oberfläche 1s2 der Außenhülse 1 in ihren Formen zusammenpassen, sind außerdem der Neigungswinkel der zweiten konischen Oberfläche 2s2 und der ersten konischen Oberfläche 1s2 relativ zur axialen Richtung A gleich. Wenn dann die zweite konische Oberfläche 2s2 radial innen liegt und mit der ersten konischen Oberfläche 1s2 zusammenpasst, können sich die Innenhülse 2 und die Außenhülse 1 relativ zueinander in der axialen Richtung A bewegen. Die Innenumfangsfläche der Innenhülse 2 ist mit einer zweiten zylindrischen Oberfläche 2s1 (ein Beispiel einer zweiten Montagefläche) zur Montage auf der Welle SH ausgebildet.

Um die elastische Verformungsfähigkeit der Innenhülse 2 zu verbessern, ist die zweite zylindrische Oberfläche 2s1 der Innenhülse 2 außerdem mit einer Vielzahl von Nuten 2c ausgebildet, wie in FIG. 1C dargestellt. Die Vielzahl von entlang des Umfangs der Innenhülse 2 beabstandeten Nuten 2c erstreckt sich jeweils (im Wesentlichen) entlang der axialen Richtung A, öffnet sich radial nach innen und ist in andere Richtungen abgeschlossen.

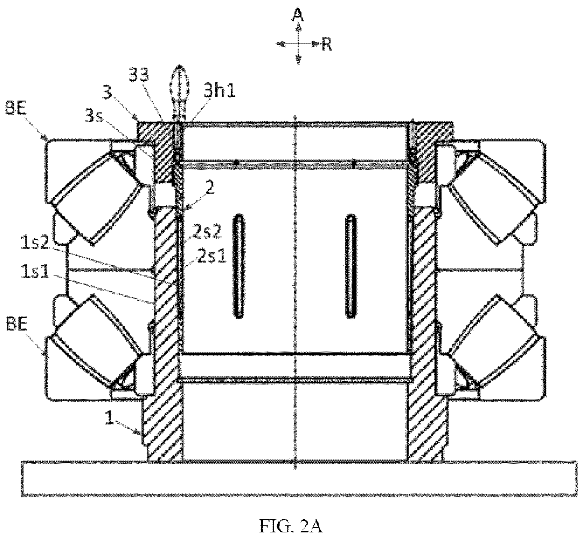

Darüber hinaus entspricht die Endfläche eines axialen Endes der Innenhülse 2 (des Gewindeabschnitts 21 oder des Endes der Innenhülse 2, das vom verjüngten Abschnitt 22 abgewandt ist) den darunter liegenden Montagelöchern 3h1 des Stützrings 3, wie in FIG. 2A gezeigt. Die Montage- und Demontageeinheit umfasst außerdem Befestigungselemente 33, wie etwa Bolzen, die mit dem Stützring 3 verschraubt werden, wenn sie durch die Montagelöcher 3h1 eingeführt werden. Die Befestigungselemente 33 liegen an der Endfläche eines axialen Endes der Innenhülse 2 an, sodass die Innenhülse 2 und der Stützring relativ zueinander fixiert werden können.

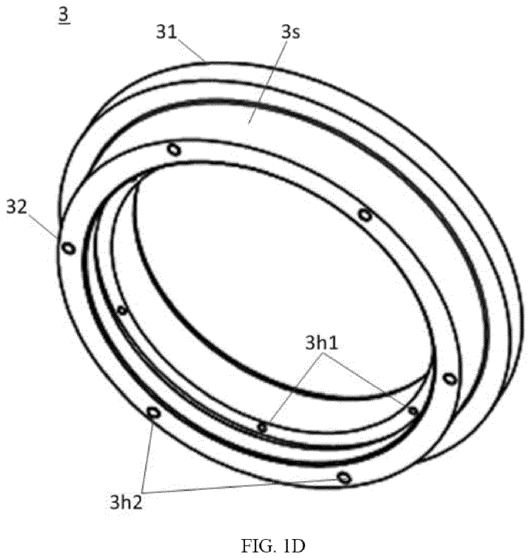

In der vorliegenden Ausführungsform ist der Stützring 3 zylinderförmig, wie in FIG. 1A und 1D dargestellt. Der Stützring 3 schließt einen zweiten Abschnitt mit großem Durchmesser 31 und einen zweiten Abschnitt mit kleinem Durchmesser 32 ein, die miteinander verbunden sind. Der Außendurchmesser des zweiten Abschnitts mit großem Durchmesser 31 ist größer als der des zweiten Abschnitts mit kleinem Durchmesser 32. Somit wird der Außenumfang des Stützrings 3 durch den zweiten Abschnitt mit großem Durchmesser 31 und den zweiten Abschnitt mit kleinem Durchmesser 32 mit einer zweiten Stufenstruktur ausgebildet. Am zweiten Abschnitt mit kleinem Durchmesser 32 ist die Außenumfangsfläche des Stützrings 3 mit einer dritten zylindrischen Oberfläche 3s (ein Beispiel einer dritten Montagefläche) zum Montieren des Lagers BE ausgebildet, welche die Bodenfläche der zweiten Stufenstruktur darstellt. Während die Bodenflächen (erste zylindrische Oberfläche 1s1 und dritte zylindrische Oberfläche 3s) der zweiten Stufenstruktur und der ersten Stufenstruktur das Lager BE tragen, dienen die Abschnitte mit großem Durchmesser (erster Abschnitt mit großem Durchmesser 11 und dritter Abschnitt mit großem Durchmesser 31) der ersten und zweiten Stufenstruktur zur Definition der axialen Position des Lagers BE. Hier kann die Oberfläche des ersten Abschnitts mit großem Durchmesser 11, die einer axialen Endseite zugewandt ist, als axiale Grenzfläche der Außenhülse bezeichnet werden, und die Endfläche des dritten Abschnitts mit großem Durchmesser 31, die der anderen axialen Endseite (der linken Seite in FIG. 2E) zugewandt ist, als axiale Begrenzungsfläche des Stützrings. Die axiale Begrenzungsfläche der Außenhülse und die axiale Begrenzungsfläche des Stützrings definieren die axiale Position des Lagers BE. Darüber hinaus ist die Innenumfangsfläche des Stützrings 3 mit einem Innengewinde ausgebildet, das dem Außengewinde des Gewindeabschnitts 21 der Innenhülse 2 entspricht. Anschließend kann der Stützring 3 mit der Innenhülse 2 verschraubt und auf dem Gewindeabschnitt 21 montiert werden, indem der Stützring 3 relativ zur Innenhülse 2 in der axialen Richtung A bewegt wird.

Wie in FIG. 1D gezeigt, ist der Stützring 3 außerdem mit einer Vielzahl von Montagelöchern 3h1 ausgebildet, die gleichmäßig entlang des Umfangs verteilt sind, der sich in der axialen Richtung A erstreckt. Der Stützring 3 weist in den Montagelöchern 3h1 ausgebildete Innengewinde für eine Schraubverbindung mit den Außengewinden der Befestigungselemente 33 auf. Darüber hinaus ist jedes Montageloch 3h1 der Endfläche eines axialen Endes der Innenhülse 2 zugewandt, sodass die Befestigungselemente 33, die sich durch die Montagelöcher 3h1 erstrecken, an der Endfläche des einen axialen Endes der Innenhülse 2 anliegen können.

Wie in FIG. 1D gezeigt, ist der Stützring 3 außerdem mit dritten Demontagelöchern 3h2 ausgebildet, die sich in der axialen Richtung A durch diesen hindurch erstrecken. Die Vielzahl von dritten Demontagelöchern 3h2, die gleichmäßig entlang des Umfangs verteilt sind, ist jeweils mit einem Innengewinde für eine Schraubverbindung mit dem Demontagewerkzeug ausgebildet. Durch Drehen der Sicherungsmutter 4 auf der Welle SH, um die darunter liegenden zweiten Demontagelöcher 4h2 der Sicherungsmutter 4 gegenüber den dritten Demontagelöchern 3h2 anzuordnen, wird das Demontagewerkzeug in den zweiten und dritten Demontagelöchern 4h2, 3h2 befestigt.

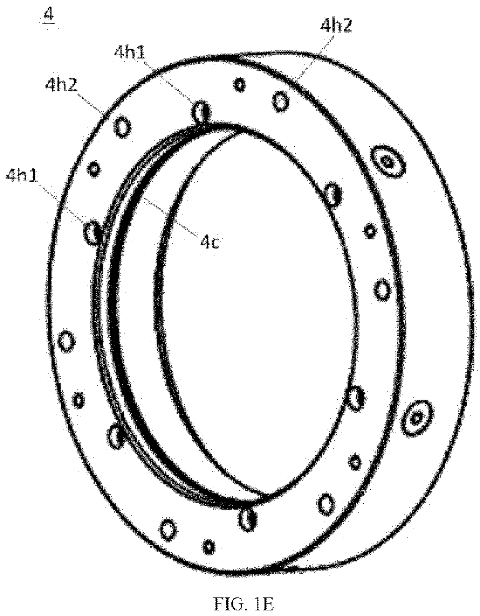

In der vorliegenden Ausführungsform ist, wie in FIG. 1A und 1E gezeigt, die Innenumfangsfläche der Sicherungsmutter 4 mit einem Innengewinde zur Schraubverbindung mit der Welle SH ausgebildet, sodass die Sicherungsmutter 4 mit der Welle SH verschraubt werden kann. Wie in FIG. 2E dargestellt, liegt die Sicherungsmutter 4 bei auf der Welle SH montierter Montage- und Demontageeinheit an der Außenhülse 1 an, um die axiale Position der Außenhülse 1 relativ zur Welle SH zu definieren. Darüber hinaus ist die Innenumfangsfläche der Sicherungsmutter 4 mit einer Ringnut 4c ausgebildet, die sich kontinuierlich über den gesamten Umfang erstreckt. Die radial nach innen offene und radial nach außen vertiefte Ringnut 4c schneidet das Innengewinde der Sicherungsmutter 4 in axialer Richtung ab. Wie in FIG. 1E gezeigt, ist die Sicherungsmutter 4 mit Montagelöchern 4h1 ausgebildet, die sich in der axialen Richtung A und durch die Ringnut 4c erstrecken. Insbesondere können die Abschnitte der Montagelöcher 4h1 auf einer axialen Endseite der Ringnut 4c mit einem Gewinde versehen sein, während diejenigen auf der anderen axialen Endseite der Ringnut 4c gegebenenfalls kein Gewinde haben. Wie in FIG. 2E gezeigt, wird/werden der/die Sicherungsbolzen 5 im Montageloch/in den Montagelöchern 4h1 befestigt und mit diesen verschraubt, sodass die Abschnitte auf beiden Seiten der Ringnut 4c der Sicherungsmutter 4 das Gewinde der Welle SH festklemmen, wodurch die axiale Position der Sicherungsmutter 4 relativ zur Welle SH definiert wird, d. h. die Sicherungsmutter 4 und die Welle SH relativ zueinander fixiert werden.

Darüber hinaus ist die Sicherungsmutter 4 mit zweiten Demontagelöchern 4h2 ausgebildet, die mit den ersten und dritten Demontagelöchern 1h3, 3h2 zusammenpassen und sich durch die Sicherungsmutter 4 in der axialen Richtung A erstrecken, wie in FIG. 1E dargestellt ist. Durch Drehen der Sicherungsmutter 4 auf der Welle SH können die zweiten Demontagelöcher 4h2 mit den ersten Demontagelöchern 1h3 der Außenhülse 1 oder den dritten Demontagelöchern 3h2 des Stützrings 3 ausgerichtet werden. Anschließend kann das Demontagewerkzeug in den ersten und zweiten Demontagelöchern 1h3, 4h2 oder in den zweiten und dritten Demontagelöchern 4h2, 3h2 befestigt werden.

Das Montageverfahren zum Montieren des Lagers BE auf der Welle SH unter Verwendung der vorstehend beschriebenen Montage- und Demontageeinheit wird nachstehend unter Bezugnahme auf FIG. 2A bis 2F veranschaulicht.

### (Montageverfahren)

Als Beispiel dient die Montage eines Paars Axiallager BE auf der Welle SH.

Als Erstes wird, wie in FIG. 2A gezeigt, das Lager BE auf der ersten Zylinderfläche 1s1 der Außenhülse 1 montiert. Insbesondere müssen das Lager BE und die Außenhülse 1 durch Presspassung zusammengebaut werden, weshalb das Lager BE oder die Außenhülse 1 vor der Montage erwärmt bzw. gekühlt werden müssen. Dann wird die Außenhülse 1 auf einer horizontalen Montagestützfläche platziert und ein Paar Axiallager BE wird vertikal auf der ersten zylindrischen Oberfläche 1s1 der Außenhülse 1 montiert. Nachdem das Paar Axiallager BE montiert ist, wird der Flansch der Lager BE an der ersten Stufenstruktur der Außenhülse 1 (dem ersten Abschnitt mit großem Durchmesser 11) positioniert. Nach Abschluss der vorstehend genannten Vorgänge wird die aus dem Lager BE und der Außenhülse 1 bestehende Einheit in Raumtemperatur gegeben.

Wie in FIG. 2A gezeigt, wird außerdem die Innenhülse 2 in der Außenhülse 1 montiert. Insbesondere wird die Innenhülse 2 vertikal in der aus dem Lager BE und der Außenhülse 1 bestehenden Einheit montiert, die auf der horizontalen Montagestützfläche platziert wird, sodass die erste konische Oberfläche 1s2 mit der zweiten konischen Oberfläche 2s2 zusammenpasst. Darüber hinaus kann die Innenhülse 2 vertikal einen bestimmten Abstand in die Außenhülse 1 gedrückt werden, um zu verhindern, dass sie sich während des Transports lösen, mit der Maßgabe, dass der Innendurchmesser der Innenhülse 2 größer ist als der Außendurchmesser der zu montierenden Welle SH.

Wie in FIG. 2A gezeigt, wird außerdem der Stützring 3 zur Schraubverbindung auf der Innenhülse 2 montiert. Nachdem die Innenhülse 2 mit dem Stützring 3 verschraubt wurde, wird die relative Position für den Oberflächenkontakt zwischen der ersten konischen Oberfläche 1s2 der Außenhülse 1 und der zweiten konischen Oberfläche 2s2 der Innenhülse 2 gemäß den tatsächlichen Größen erfasster Punkte auf dem Prüfbericht der Außenhülse 1 und der Innenhülse 2 bestimmt; und die Außenhülse 1 wird gedrückt, um die Außenhülse 1 und die Innenhülse 2 in einer vorbestimmten relativen Position zueinander zu platzieren und einen Spalt für eine Spielpassung zwischen der Innenhülse 2 und der Welle SH zu ermöglichen. Darüber hinaus wird die Schraubverbindungslänge des Außengewindes der Innenhülse 2 und des Innengewindes des Stützrings 3 gemäß den tatsächlichen Breitengrößen auf dem Prüfbericht des Stützrings 3 und des Lagers BE angepasst, um den Vorschubabstand der Außenhülse 1 auf der Innenhülse 2 in nachfolgenden Montageschritten sicherzustellen. Dieser Vorschubabstand ist der axiale Abstand zwischen dem Flansch des Lagers BE und der zweiten Stufenstruktur (zweiter Abschnitt mit großem Durchmesser 31) des Stützrings 3, wie in FIG. 2A bis 2C gezeigt. Wenn der Flansch des Lagers BE in Kontakt mit der zweiten Stufenstruktur des Stützrings 3 ist, kann das Ausmaß der Presspassung zwischen der Innenhülse 2 und der Welle SH sichergestellt werden.

Es ist zu beachten, dass, wenn der Wellendurchmesser außerhalb der Toleranz liegt, die relative Position des Stützrings 3 und der Innenhülse 2 gemäß dem tatsächlichen Wellendurchmesser angepasst werden müssen, um eine Presspassung zwischen den einzelnen Bestandteilen (d. h. der Welle SH, der Innenhülse 2, der Außenhülse 1 und dem Lagerinnenring) in nachfolgenden Montageschritten sicherzustellen. Es ist zu beachten, dass die vorstehende Anpassung von Parametern wie der maximalen Tangentialspannung für das Material des Lagerinnenrings und dessen geometrischen Abmessungen abhängt. Die Schraubverbindungslänge des Innengewindes des Stützrings 3 und des Außengewindes der Innenhülse 2 kann durch einen Einstellgriff eingestellt werden, wie in FIG. 1A und 2A gezeigt. Nachdem die Position des Stützrings 3 bestimmt wurde, wird der Einstellgriff entfernt und der Stützring 3 und die Innenhülse 2 werden durch Befestigungselemente 33, beispielsweise Feststellschrauben, relativ zueinander fixiert. FIG. 2A zeigt eine schematische Darstellung der Einheit nach den vorstehenden Montageschritten.

Wenn außerdem ein Lagersitz SE montiert werden muss, wird die Einheit nach den vorstehenden Montageschritten umgedreht (d. h. auf den Kopf gestellt) und im Lagersitz SE befestigt, der auf der horizontalen Montagestützfläche platziert ist; anschließend wird eine Endabdeckung CO befestigt und durch Bolzen mit dem Lagersitz SE verbunden, um die fertige Einheit zu erhalten, wie in FIG. 2B gezeigt. Anschließend wird die aus dem Lager BE, der Außenhülse 1, der Innenhülse 2, dem Stützring 3, dem Lagersitz SE und der Endabdeckung CO bestehende Einheit horizontal oder vertikal auf der Welle SH montiert, bis die axiale Endfläche des zweitem Abschnitts mit großem Durchmesser 31 des Stützrings 3 an der Schulter der Welle SH anliegt. Die Positionierung der gesamten Einheit in axialer Richtung erfolgt durch Anliegen des Stützrings 3 an der Schulter der Welle SH. Da der Innendurchmesser der Außenhülse 1 geringfügig größer ist als der Wellendurchmesser, liegen die Innenhülse 2 und der Stützring 3 in diesem Schritt in Spielpassung mit der Welle SH. Somit kann der vorstehende Montagevorgang ohne jegliche Hilfsmittel durchgeführt werden.

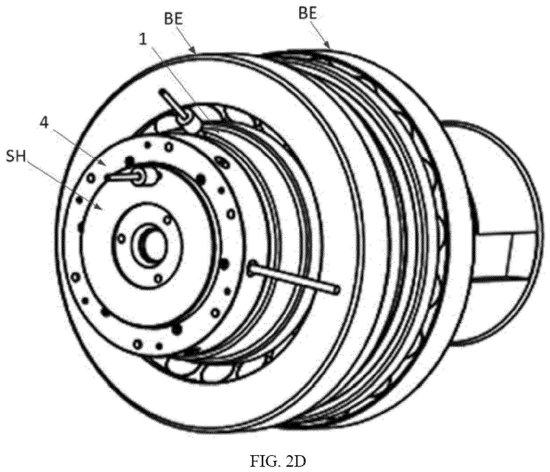

Wie in FIG. 2C und 2D gezeigt, sind außerdem Hydraulikmuttern und Hydraulikpumpenanschlüsse auf der Welle SH montiert. Die Hydraulikmuttern üben einen Axialschub auf die Außenhülse 1 aus, bis der Flansch des Lagers BE mit dem zweiten Abschnitt mit großem Durchmesser 31 des Stützrings 3 in Kontakt ist. Bei dem vorstehenden Verfahren ermöglicht die innere Ölnut in der ersten konischen Oberfläche 1s2 der Außenhülse 1 die Bereitstellung von Öldruck und die Bildung eines Ölfilms zwischen der ersten konischen Oberfläche 1s2 der Außenhülse 1 und der zweiten konischen Oberfläche 2s2 die Innenhülse 2. Die Reibung zwischen der ersten konischen Oberfläche 1s2 und der zweiten konischen Oberfläche 2s2 wird verringert, wodurch der Axialschub verringert wird. Der Abstand von der Endfläche der Außenhülse 1 zur Welle SH (die linke Endfläche in FIG. 2C) kann erkannt werden, um zu bestimmen, ob das Lager BE ordnungsgemäß montiert ist. Nachdem festgestellt wurde, dass das Lager BE ordnungsgemäß montiert ist, müssen die Hydraulikmuttern für eine vorgegebene Zeit unter Druck gehalten werden; andernfalls müssen sie weiter vorgeschoben werden, um einen Axialschub auf die Außenhülse 1 auszuüben. Nach der Druckhaltung werden die Hydraulikmuttern und die Hydraulikpumpenanschlüsse entfernt und der Öleinlass 1h1 der Außenhülse 1 und der Öleinlass der Welle SH (an der Endfläche des axialen Endes der Welle SH) werden mit Kappen abgedichtet, um zu verhindern, dass Fremdkörper in das Innere des Lagers BE gelangen.

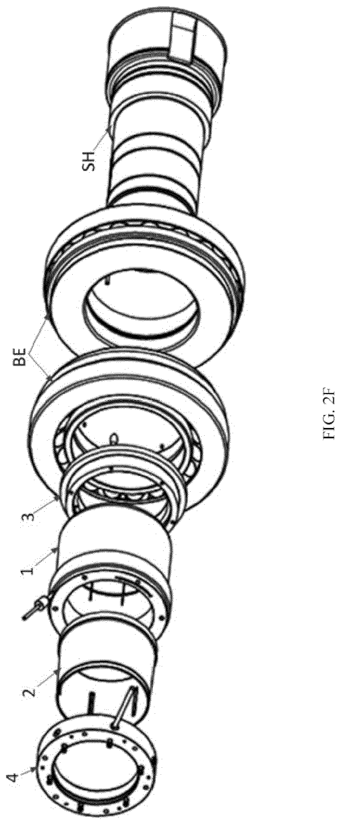

Wie in FIG. 2E und 2F gezeigt, wird schließlich die Sicherungsmutter 4 am Ende der Welle SH montiert, wobei mindestens 80 % der Endfläche der Sicherungsmutter 4 an der der Außenhülse 1 anliegen; und die Sicherungsmutter 4 wird durch Sicherungsbolzen 5 arretiert und relativ zur Welle SH fixiert, die zusammen mit der Schulter die aus der Außenhülse 1, der Innenhülse 2, dem Stützring 3 und dem Lager BE bestehende Einheit axial begrenzt. Mit den vorstehenden Schritten ist der gesamte Montagevorgang abgeschlossen.

Die Wellen- und Lagereinheit gemäß der vorliegenden Anmeldung kann durch das vorstehende Montageverfahren erhalten werden.

### (Der Aufbau der Wellen- und Lagereinheit gemäß der vorliegenden Anmeldung)

Wie in FIG. 2E und 2F gezeigt, umfasst die Wellen- und Lagereinheit gemäß der vorliegenden Anmeldung die Welle SH, das Lager BE und die Montage- und Demontageeinheit, die zusammengebaut sind. Die Außenhülse 1, die Innenhülse 2 und der Stützring 3 liegen zumindest teilweise zwischen der Welle SH und dem Lager BE. Die Sicherungsmutter 4 und die Schulter der Welle SH definieren die axiale Position der Einheit, die aus der Außenhülse 1, der Innenhülse 2, dem Stützring 3 und dem Lager BE besteht.

Darüber hinaus ist die Welle SH mit einem Wellenölversorgungskanal op ausgebildet, der einen Öleinlass an der Endfläche eines axialen Endes der Welle SH und einen Ölauslass an dem der zweiten zylindrischen Oberfläche 2s1 der Innenhülse 2 gegenüberliegenden Abschnitt der Außenumfangsfläche der Welle SH aufweist. Somit ist es möglich, während der Demontage Öldruck bereitzustellen und einen Ölfilm zwischen der Außenumfangsfläche der Welle SH und der zweiten zylindrischen Oberfläche 2s1 der Innenhülse 2 zu bilden. Dies erleichtert die Relativbewegung der Innenhülse 2 und der Welle SH in axialer Richtung und somit die Demontage der Innenhülse.

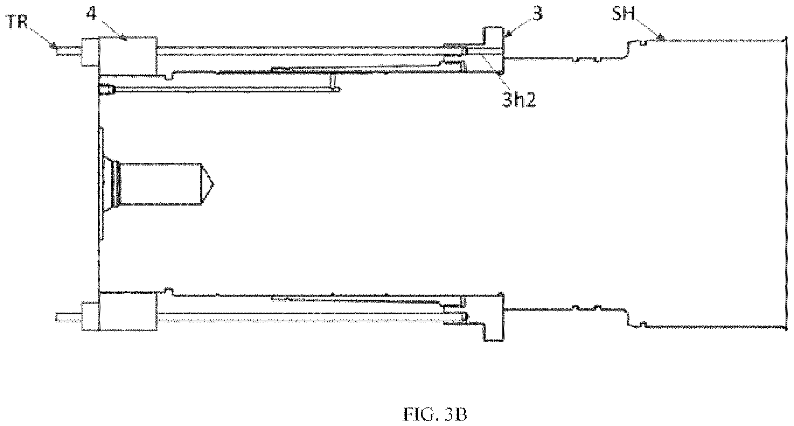

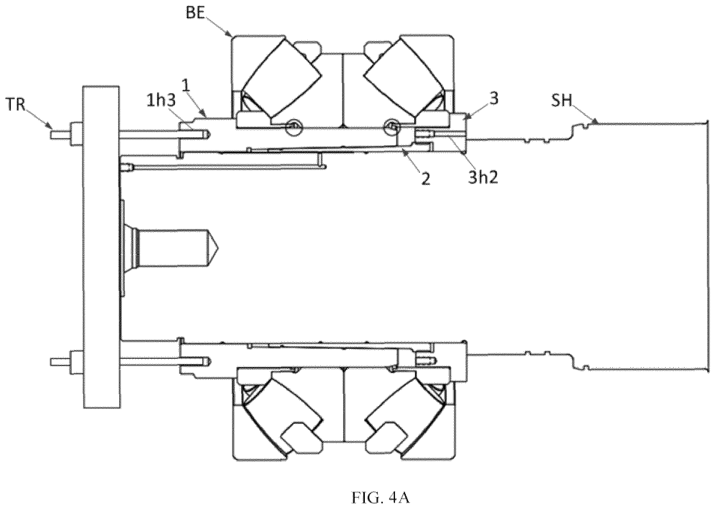

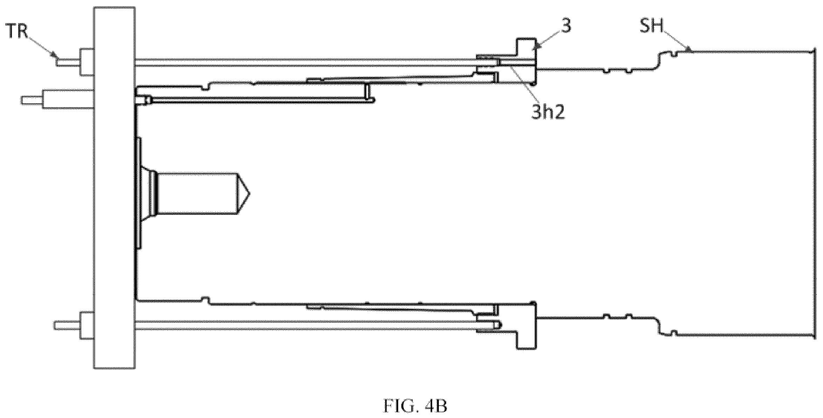

Das Demontageverfahren zum Demontieren des Lagers BE von der Welle SH unter Verwendung der Montage- und Demontageeinheit wird nachstehend unter Bezugnahme auf FIG. 3A, 3B, 4A und 4B veranschaulicht.

### (Demontageverfahren)

In Bezug auf die vorstehend beschriebene Wellen- und Lagereinheit wird das Demontageverfahren unter Verwendung der Montage- und Demontageeinheit wie folgt veranschaulicht.

Bei einem Demontageverfahren (FIG. 3A) werden zunächst die Sicherungsbolzen 5 und die Kappen der Außenhülse 1 und der Welle SH entfernt. Dann wird die Sicherungsmutter 4 in die Richtung zum Lösen vom Wellenendgewinde gedreht, sodass zwischen den Endflächen der Sicherungsmutter 4 und der Außenhülse 1 ein gewisser Spalt als Demontageraum für die aus der Außenhülse 1, dem Lager BE und weiteren Bestandteilen bestehende Einheit verbleibt.

Außerdem wird der Hydraulikpumpenanschluss am Öleinlass 1h1 der Außenhülse 1 befestigt, um Hydrauliköl für die Außenhülse 1 zu pumpen, was Öldruck bereitstellt und einen Ölfilm zwischen der ersten konischen Oberfläche 1s2 der Außenhülse 1 und der zweiten konischen Oberfläche 2s2 der Innenhülse 2 bildet. Wenn die durch das Hydrauliköl erzeugte Wirkkraft nicht ausreicht, um die Außenhülse 1 zu demontieren, wird das zweite Demontageloch 4h2 der axialen Sicherungsmutter 4 mit dem ersten Demontageloch 1h3 der Außenhülse 1 ausgerichtet, wie in FIG. 3A gezeigt. Die Schraube TR erstreckt sich durch das gewindelose zweite Demontageloch 4h2 der Sicherungsmutter 4 in das erste Demontageloch 1h3 der Außenhülse 1 zur Schraubverbindung. Auf das freie Ende der Schraube TR wird eine Mutter aufgeschraubt. Durch Drehen der Mutter mit einem Werkzeug wie einem Drehmomentschlüssel treibt die Schraube TR die Außenhülse 1 an, um sie von der Innenhülse 2 zu lösen. Der Hydraulikpumpenanschluss, die Mutter, die Schraube TR und die Sicherungsmutter 4 werden nacheinander entfernt. Anschließend erfolgt die Entfernung der Einheit, die aus der Außenhülse 1, dem Lager BE, dem Lagersitz SE und der Endabdeckung CO besteht.

Wenn die Innenhülse 2 und der Stützring 3 nicht manuell entfernt werden können, wird außerdem die Sicherungsmutter 4 am Wellenende montiert, wobei das zweite Demontageloch 4h2 der Sicherungsmutter 4 mit dem dritten Montageloch 3h2 des Stützrings 3 ausgerichtet wird, wie in FIG. 3B gezeigt. Die Schraube TR erstreckt sich durch das gewindelose zweite Demontageloch 4h2 der Sicherungsmutter 4 in das dritte Demontageloch 3h2 des Stützrings 3 zur Schraubverbindung. Auf das freie Ende der Schraube TR wird dann eine Mutter aufgeschraubt. Der Hydraulikpumpenanschluss wird am Öleinlass des Wellenölversorgungskanals op befestigt, um Hydrauliköl für die Welle SH zu pumpen. Das Hydrauliköl kann die Welle SH vor Beschädigungen beim Entfernen der Innenhülse 2 schützen und so den Demontagevorgang erleichtern. Durch Drehen der Mutter mit einem Werkzeug wie einem Drehmomentschlüssel treibt die Schraube TR die Innenhülse 2 an, um die Innenhülse 2 und den Stützring 3 einen Abstand weit zu entfernen. Der Hydraulikpumpenanschluss, die Mutter, die Schraube TR und die Sicherungsmutter 4 werden nacheinander entfernt. Anschließend können die Innenhülse 2 und der Stützring 3 manuell von der Welle SH entfernt werden. Mit den vorstehenden Schritten ist der gesamte Demontagevorgang abgeschlossen.

Bei einem anderen alternativen Demontageverfahren (FIG. 4A und 4B) kann die Sicherungsmutter 4 bei der Demontage durch eine Demontageplatte ersetzt werden. Wenn die von der Mutter ausgeübte Demontagekraft nicht ausreicht, kann zwischen der Demontageplatte und dem Wellenende eine Hebevorrichtung montiert werden, um das Lager BE und die Außenhülse 1 von der konischen Oberfläche der Innenhülse 2 zu lösen.

Die vorliegende Anmeldung ist nicht auf die vorstehenden Ausführungsformen beschränkt und der Fachmann kann im Rahmen der Lehre der vorliegenden Anmeldung verschiedene Modifikationen an den vorstehenden Ausführungsformen vornehmen, ohne vom Schutzumfang der vorliegenden Anmeldung abzuweichen. Zusätzlich erfolgt eine ergänzende Erläuterung wie folgt.
i. Es versteht sich, dass die Montage- und Demontageeinheit gemäß der vorliegenden Anmeldung bei der Montage und Demontage verschiedener Arten von Lagern und Wellen angewendet werden kann. Mit der Montage- und Demontageeinheit gemäß der vorliegenden Anmeldung ist der Montage- und Demontagevorgang einfach und leicht durchzuführen, und während der Montage und Demontage wird kein Schaden am Lager verursacht.
ii. Es versteht sich, dass zwar die erste, zweite und dritte Montagefläche für die Außenhülse 1, die Innenhülse 2 bzw. den Stützring 3 in den vorstehenden spezifischen Ausführungsformen alle zylindrische Oberflächen sind, die vorliegende Anmeldung aber nicht darauf beschränkt ist. Die spezifischen Formen der ersten, zweiten und dritten Montagefläche können je nach Bedarf entsprechend festgelegt werden.
iii. Es versteht sich, dass, da bei der Montage und Demontage mit der Montage- und Demontageeinheit gemäß der vorliegenden Anmeldung nur ein Paar relativ zueinander gleitender Oberflächen (die erste konische Oberfläche 1s2 und die zweite konische Oberfläche 2s2) vorhanden ist, kein Schaden am Lager BE und an der Welle SH verursacht wird. Darüber hinaus kann durch die Einstellung der relativen Position zwischen dem Stützring 3 und der Innenhülse 2 der Gleitabstand der Außenhülse 1 auf der Innenhülse 2 vordefiniert werden, um die Montage zu erleichtern. Darüber hinaus kann der Demontagevorgang mit entsprechenden Demontagelöchern in der Außenhülse 1, dem Stützring 3 und der Sicherungsmutter 4 einfach durch einen Schrauben-Mutter-Mechanismus abgeschlossen werden, der sich durch diese Löcher erstreckt. Eine derartige Demontage ist sehr bequem und schnell, ohne dass das Lager BE und die Welle SH beschädigt werden.
iv. Es versteht sich, dass der Abschnitt mit kleinem Durchmesser 32 des Stützrings 3 weggelassen werden kann. Mit anderen Worten muss der Stützring 3 das Lager BE lediglich axial begrenzen, ohne das Lager BE radial innen zu stützen.

### Liste der Bezugszeichen

- 1: Außenhülse
- 11: Erster Abschnitt mit großem Durchmesser
- 12: Erster Abschnitt mit kleinem Durchmesser
- 1s1: Erste zylindrische Oberfläche (erste Montagefläche)
- 1s2: Erste konische Oberfläche
- 1c1: Axiale Ölnut(en)
- 1c2: Umfangsölnut
- 1p: Ölversorgungskanal
- 1h1: Öleinlass
- 1h2: Ölauslass
- 1h3: Erstes Demontageloch/erste Demontagelöcher
- 2: Innenhülse
- 21: Gewindeabschnitt
- 22: Verjüngter Abschnitt
- 2s1: Zweite zylindrische Oberfläche (zweite Montagefläche)
- 2s2: Zweite konische Oberfläche
- 2c: Nut(en)
- 3: Stützring
- 31: Zweiter Abschnitt mit großem Durchmesser
- 32: Zweiter Abschnitt mit kleinem Durchmesser
- 33: Befestigungselement(e)
- 3s: Dritte zylindrische Oberfläche (dritte Montagefläche)
- 3h1: Montageloch/Montagelöcher
- 3h2: Drittes Montageloch/dritte Montagelöcher
- 4: Sicherungsmutter
- 4c: Ringnut
- 4h1: Montageloch/Montagelöcher
- 4h2: Zweites Demontageloch/zweite Demontagelöcher
- 5: Sicherungsbolzen
- SH: Welle
- op: Wellenölversorgungskanal
- BE: Lager
- CO: Endabdeckung
- SE: Lagersitz
- TR: Schraube
- A: Axiale Richtung
- R: Radiale Richtung.

## Patentansprüche

1. Montage- und Demontageeinheit zum Montieren eines Lagers (BE) auf und Demontieren desselben von einer Welle (SH), wobei die Einheit Folgendes umfasst:
eine Außenhülse (1), wobei die Außenumfangsfläche der Außenhülse (1) mit einer ersten Montagefläche (1s1) zur Montage des Lagers (BE) und die Innenumfangsfläche der Außenhülse (1) mit einer ersten konischen Oberfläche (1s2) ausgebildet ist, die sich zu einem axialen Ende der Außenhülse (1) in einer axialen Richtung (A) der Montage- und Demontageeinheit erstreckt, während sie sich radial nach außen erstreckt;
eine Innenhülse (2), wobei die Innenumfangsfläche der Innenhülse (2) mit einer zweiten Montagefläche (2s1) zur Montage auf der Welle und die Außenumfangsfläche der Innenhülse (2) mit einer zweiten konischen Oberfläche (2s2) und einem Gewindeabschnitt (21) ausgebildet ist, der sich an einer axialen Endseite der zweiten konischen Oberfläche (2s2) befindet, sich die zweite konische Oberfläche (2s2) in der axialen Richtung (A) zum anderen axialen Ende der Innenhülse (2) erstreckt, während sie sich vom Gewindeabschnitt (21) radial nach innen erstreckt, wobei, wenn sich die zweite konische Oberfläche (2s2) radial innen befindet und mit der ersten konischen Oberfläche (1s2) in Kontakt steht, sich die Innenhülse (2) und die Außenhülse (1) in der axialen Richtung (A) relativ zueinander bewegen können; und
einen Stützring (3), der mit dem Gewindeabschnitt (21) verschraubt ist, wobei sich der Stützring (3) und die Innenhülse (2) relativ zueinander in der axialen Richtung (A) bewegen können, während die Schraubverbindung aufrechterhalten wird.

2. Montage- und Demontageeinheit nach Anspruch 1, wobei die Montage- und Demontageeinheit außerdem eine Sicherungsmutter (4) umfasst, die mit der Welle (SH) verschraubt ist, um eine axiale Position der Außenhülse (1) relativ zur Welle (SH) am anderen axialen Ende der Außenhülse (1) zu definieren.

3. Montage- und Demontageeinheit nach Anspruch 2, wobei die Montage- und Demontageeinheit außerdem Sicherungsbolzen (5) umfasst,
eine Innenumfangsfläche der Sicherungsmutter (4) mit einer Ringnut (4c) ausgebildet ist, die sich entlang des Umfangs der Montage- und Demontageeinheit erstreckt; wobei die Sicherungsmutter (4) bei auf der Welle (SH) montierter Montage- und Demontageeinheit an der Außenhülse (1) anliegt,
die Sicherungsmutter (4) mit Montagelöchern (4h1) ausgebildet ist, die sich in der axialen Richtung (A) und durch die Ringnut (4c) erstrecken, und die Sicherungsbolzen (5) in den Montagelöchern (4h1) befestigt werden, um eine axiale Position der Sicherungsmutter (4) relativ zur Welle (SH) zu fixieren.

4. Montage- und Demontageeinheit nach einem der Ansprüche 1 bis 3, wobei die Außenhülse (1) mit einer ersten Stufenstruktur ausgebildet ist, deren Bodenfläche die erste Montagefläche (1s1) ist; und die erste Stufenstruktur und der Stützring (3) eine axiale Position des Lagers (BE) definieren.

5. Montage- und Demontageeinheit nach Anspruch 4, wobei der Stützring (3) mit einer zweiten Stufenstruktur ausgebildet ist, deren Bodenfläche eine dritte Montagefläche (3s) zum Stützen des Lagers (BE) ist.

6. Montage- und Demontageeinheit nach einem der Ansprüche 1 bis 5, wobei die erste konische Oberfläche (1s2) der Außenhülse (1) mit einer inneren Ölnut ausgebildet ist, die sich radial nach innen öffnet, und außerdem ein Ölversorgungskanal (1p) im Inneren der Außenhülse (1) ausgebildet ist, der mit der inneren Ölnut in Verbindung steht.

7. Montage- und Demontageeinheit nach Anspruch 6, wobei die innere Ölnut eine Umfangsölnut (1c2) und eine Vielzahl von axialen Ölnuten (1c1) umfasst, die entlang des Umfangs der Montage- und Demontageeinheit voneinander beabstandet sind und sich jeweils in der axialen Richtung (A) erstrecken; und sich die Umfangsölnut (1c2) kontinuierlich entlang des Umfangs erstreckt und in Verbindung mit jeder der axialen Ölnuten (1c1) steht.

8. Montage- und Demontageeinheit nach einem der Ansprüche 1 bis 7, wobei die zweite Montagefläche (2s1) der Innenhülse (2) mit einer Vielzahl von Nuten (2c) ausgebildet ist, die entlang des Umfangs der Montage- und Demontageeinheit voneinander beabstandet sind, die sich jeweils radial nach innen öffnen und sich in der axialen Richtung (A) erstrecken.

9. Montage- und Demontageeinheit nach einem der Ansprüche 1 bis 8, wobei der Stützring (3) mit Montagelöchern (3h1) ausgebildet ist, die sich in der axialen Richtung (A) durch diesen hindurch erstrecken und einer axialen Endfläche der Innenhülse (2) zugewandt sind,
die Montage- und Demontageeinheit außerdem Befestigungselemente (33) umfasst, die sich durch die Montagelöcher (3h1) erstrecken und an der axialen Endfläche der Innenhülse (2) anliegen, sodass die Innenhülse (2) und der Stützring (3) relativ zueinander fixiert sind.

10. Montage- und Demontageeinheit nach Anspruch 2 oder 3, wobei die Außenhülse (1) mit ersten Demontagelöchern (1h3) ausgebildet ist, die sich in der axialen Richtung (A) erstrecken, und die Sicherungsmutter (4) mit zweiten Demontagelöchern ausgebildet ist (4h2), die sich in der axialen Richtung (A) durch die Sicherungsmutter (4) erstrecken und mit den ersten Demontagelöchern (1h3) übereinstimmen; und die zweiten Demontagelöcher (4h2) mit den ersten Demontagelöchern (1h3) ausgerichtet werden können, indem die Sicherungsmutter (4) relativ zur Welle (SH) gedreht wird.

11. Montage- und Demontageeinheit nach Anspruch 10, wobei der Stützring (3) mit dritten Demontagelöchern (3h2) ausgebildet ist, die sich in der axialen Richtung (A) erstrecken; und die zweiten Demontagelöcher (4h2) mit den dritten Demontagelöchern (3h2) ausgerichtet werden können, indem die Sicherungsmutter (4) relativ zur Welle (SH) gedreht wird.

12. Wellen- und Lagereinheit, umfassend eine Welle (SH), ein Lager (BE) und die Montage- und Demontageeinheit nach einem der Ansprüche 1 bis 11, wobei eine Außenhülse (1), eine Innenhülse (2) und ein Stützring (3) der Montage- und Demontageeinheit zumindest teilweise zwischen der Welle (SH) und dem Lager (BE) angeordnet sind und die Montage und Demontage des Lagers (BE) auf/von der Welle unter Verwendung der Montage- und Demontageeinrichtung erfolgt.

13. Wellen- und Lageranordnung nach Anspruch 12, wobei ein Wellenölversorgungskanal (op) innerhalb der Welle (SH) ausgebildet ist, wobei ein Ölauslass in einer Außenumfangsfläche der Welle (SH) angeordnet ist und einer zweiten Montagefläche (2s1) der Innenhülse (2) zugewandt ist.

14. Wellen- und Lageranordnung nach Anspruch 12 oder 13, wobei die Welle (SH) mit einer Schulter ausgebildet ist, die am Stützring (3) anliegt, sodass die Schulter die Montage- und Demontageeinheit axial begrenzt.

15. Montageverfahren zum Montieren eines angetriebenen Lagers auf einer Welle unter Verwendung der Montage- und Demontageeinheit nach einem der Ansprüche 1 bis 11, umfassend die Schritte:
Befestigen des Lagers (BE) auf einer ersten Montagefläche (1s1) der Außenhülse (1) in einer ineinandergesteckten Weise, sodass es an einer ersten Stufenstruktur der Außenhülse (1) anliegt;
Einsetzen der Innenhülse (2) in die Außenhülse (1), sodass die zweite konische Oberfläche (2s2) mit der ersten konischen Oberfläche (1s2) in Kontakt steht;
Schraubverbinden des Stützrings (3) mit der Innenhülse (2), Einstellen einer Schraubverbindungslänge des Stützrings (3) und der Innenhülse (2), um einen vorbestimmten axialen Spalt zwischen dem Lager (BE) und einer Stützring-Axialbegrenzungsfläche des Stützrings (3) zu erhalten, und anschließendes Fixieren des Stützrings (3) und der Innenhülse (2);
Befestigen der aus der Außenhülse (1), der Innenhülse (2), dem Stützring (3) und dem Lager (BE) bestehenden Einheit auf der Welle (SH) in einer ineinandergesteckten Weise, sodass der Stützring (3) an der Schulter der Welle (SH) anliegt; und
Drücken der Außenhülse (1), sodass sich die Außenhülse (1) und das Lager (BE) relativ zur Innenhülse (2) in der axialen Richtung (A) bewegen und schließlich das Lager (BE) an der axialen Begrenzungsfläche des Stützrings (3) in der axialen Richtung (A) anliegt.

16. Montageverfahren nach Anspruch 15, wobei beim Drücken der Außenhülse (1) Hydrauliköl zwischen der ersten konischen Oberfläche (1s2) und der zweiten konischen Oberfläche (2s2) durch einen Ölversorgungskanal (1p) der Außenhülse (1) zugeführt wird.

17. Montageverfahren nach Anspruch 15 oder 16, wobei, nachdem das Lager (BE) schließlich an der Stützring-Axialbegrenzungsfläche des Stützrings (3) in der axialen Richtung (A) anliegt, die Sicherungsmutter (4) der Montage- und Demontageeinheit auf der Welle (SH) gegen die Außenhülse (1) montiert wird.

18. Demontageverfahren zum Demontieren eines Lagers von einer Welle unter Verwendung der Montage- und Demontageeinheit nach Anspruch 6 oder 7, umfassend die Schritte:
wenn dem Ölversorgungskanal (1p) der Außenhülse (1) Hydrauliköl zugeführt wird, Trennen der Außenhülse (1) von der Innenhülse (2) und Demontieren der Außenhülse (1) von der Welle.

19. Demontageverfahren zum Demontieren eines Lagers von einer Welle unter Verwendung der Montage- und Demontageeinheit nach einem der Ansprüche 1 bis 11, umfassend die Schritte:
Demontieren der Außenhülse (1) und des Lagers (BE) von der Welle (SH) unter Verwendung einer Schraube (TR), die durch eine an der Welle (SH) befestigte Sicherungsmutter (4) oder eine an der Welle (SH) anliegende Demontageplatte verläuft und in die ersten Demontagelöcher (1h3) der Außenhülse (1) eingeschraubt wird; und
anschließend Demontieren der Innenhülse (2) von der Welle (SH) unter Verwendung einer Schraube (TR), die durch die Sicherungsmutter (4) oder die Demontageplatte verläuft und in die dritten Demontagelöcher (3h2) des Stützrings (3) eingeschraubt wird.

20. Demontageverfahren nach Anspruch 18 oder 19, wobei während der Demontage der Innenhülse (2) von der Welle (SH) Hydrauliköl zwischen der Welle (SH) und der Innenhülse (2) durch den Wellenölversorgungskanal (op) der Welle (SH) zugeführt wird.

## Claims

1. A mounting and disassembling unit for mounting a bearing (BE) onto and disassembling it from a shaft (SH), the unit comprising the following:
an outer sleeve (1), wherein the outer circumferential surface of the outer sleeve (1) is formed with a first mounting surface (1s1) for mounting the bearing (BE) and the inner circumferential surface of the outer sleeve (1) is formed with a first conical surface (1s2) which extends to an axial end of the outer sleeve (1) in an axial direction (A) of the mounting and disassembling unit while extending radially outwards;
an inner sleeve (2), wherein the inner circumferential surface of the inner sleeve (2) is formed with a second mounting surface (2s1) for mounting on the shaft and the outer circumferential surface of the inner sleeve (2) is formed with a second conical surface (2s2) and a threaded section (21) located at an axial end face of the second conical surface (2s2), the second conical surface (2s2) extending in the axial direction (A) to the other axial end of the inner sleeve (2) while extending radially inward from the threaded section (21), wherein, when the second conical surface (2s2) is located radially on the inside and is in contact with the first conical surface (1s2), the inner sleeve (2) and the outer sleeve (1) are able to move relative to each other in the axial direction (A); and
a support ring (3) which is screwed to the threaded section (21), wherein the support ring (3) and the inner sleeve (2) can move relative to each other in the axial direction (A) while maintaining the screw connection.

2. The mounting and disassembling unit according to Claim 1, wherein the mounting and disassembling unit further comprises a locking nut (4) which is screwed to the shaft (SH) to define an axial position of the outer sleeve (1) relative to the shaft (SH) at the other axial end of the outer sleeve (1).

3. The mounting and disassembling unit according to Claim 2, wherein the mounting and disassembling unit further comprises locking bolts (5),
an inner circumferential surface of the locking nut (4) being formed with an annular groove (4c) which extends along the circumference of the mounting and disassembling unit; wherein the locking nut (4) bears against the outer sleeve (1) when the mounting and disassembling unit is mounted on the shaft (SH),
the locking nut (4) being formed with mounting holes (4h1) extending in the axial direction (A) and through the annular groove (4c), and the locking bolts (5) being fastened in the mounting holes (4h1) to fix an axial position of the locking nut (4) relative to the shaft (SH).

4. The mounting and disassembling unit according to any one of Claims 1 to 3, wherein the outer sleeve (1) is formed with a first stepped structure, the bottom surface of which is the first mounting surface (1s1); and wherein the first stepped structure and the support ring (3) define an axial position of the bearing (BE).

5. The mounting and disassembling unit according to Claim 4, wherein the support ring (3) is formed with a second stepped structure, the bottom surface of which is a third mounting surface (3s) for supporting the bearing (BE).

6. The mounting and disassembling unit according to any one of Claims 1 to 5, wherein the first conical surface (1s2) of the outer sleeve (1) is formed with an inner oil groove which opens radially inwards, and also with an oil supply channel (1p) inside the outer sleeve (1) which is connected to the inner oil groove.

7. The mounting and disassembling unit according to Claim 6, wherein the inner oil groove comprises a circumferential oil groove (1c2) and a plurality of axial oil grooves (1c1) spaced apart from each other along the circumference of the mounting and disassembling unit and each extending in the axial direction (A); and wherein the circumferential oil groove (1c2) extends continuously along the circumference and is connected to each of the axial oil grooves (1c1).

8. The mounting and disassembling unit according to any one of Claims 1 to 7, wherein the second mounting surface (2s1) of the inner sleeve (2) is formed with a plurality of grooves (2c) spaced apart from each other along the circumference of the mounting and disassembling unit, each of which opens radially inwards and extends in the axial direction (A).

9. The mounting and disassembling unit according to any one of Claims 1 to 8, wherein the support ring (3) is formed with mounting holes (3h1) which extend through the support ring (3) in the axial direction (A) and are directed towards an axial end surface of the inner sleeve (2), the mounting and disassembling unit also comprising fastening elements (33) which extend through the mounting holes (3h1) and bear against the axial end surface of the inner sleeve (2) so that the inner sleeve (2) and the support ring (3) are fixed relative to each other.

10. The mounting and disassembling unit according to Claim 2 or 3, wherein the outer sleeve (1) is formed with first disassembly holes (1h3) which extend in the axial direction (A), and the locking nut (4) is formed with second disassembly holes (4h2) which extend through the locking nut (4) in the axial direction (A) and match the first disassembly holes (1h3); and wherein the second disassembly holes (4h2) can be aligned with the first disassembly holes (1h3) by rotating the locking nut (4) relative to the shaft (SH).

11. The mounting and disassembling unit according to Claim 10, wherein the support ring (3) is formed with third disassembly holes (3h2) which extend in the axial direction (A); and wherein the second disassembly holes (4h2) can be aligned with the third disassembly holes (3h2) by rotating the locking nut (4) relative to the shaft (SH).

12. A shaft and bearing unit comprising a shaft (SH), a bearing (BE) and the mounting and disassembling unit according to any one of Claims 1 to 11, wherein an outer sleeve (1), an inner sleeve (2) and a support ring (3) of the mounting and disassembling unit are arranged at least partially between the shaft (SH) and the bearing (BE) and the mounting and disassembling of the bearing (BE) onto or from the shaft is carried out using the mounting and disassembling unit.

13. The shaft and bearing unit according to Claim 12, wherein a shaft oil supply channel (op) is formed inside the shaft (SH), wherein an oil outlet is arranged in an outer circumferential surface of the shaft (SH) and faces a second mounting surface (2s1) of the inner sleeve (2).

14. The shaft and bearing arrangement according to Claim 12 or 13, wherein the shaft (SH) is formed with a shoulder which bears against the support ring (3) so that the shoulder axially delimits the mounting and disassembling unit.

15. A mounting method for mounting a driven bearing onto a shaft using the mounting and disassembling unit according to any one of Claims 1 to 11, comprising the steps of:
fastening the bearing (BE) to a first mounting surface (1s1) of the outer sleeve (1) in an interlocking manner, so that it bears against a first stepped structure of the outer sleeve (1);
inserting the inner sleeve (2) into the outer sleeve (1) so that the second conical surface (2s2) is in contact with the first conical surface (1s2);
connecting the support ring (3) to the inner sleeve (2) by means of a screw connection, setting a screw connection length of the support ring (3) and the inner sleeve (2) to obtain a predetermined axial gap between the bearing (BE) and an axial support ring boundary surface of the support ring (3), and subsequently fixing the support ring (3) and the inner sleeve (2);
fastening the unit consisting of the outer sleeve (1), the inner sleeve (2), the support ring (3) and the bearing (BE) to the shaft (SH) in an interlocking manner, so that the support ring (3) bears against the shoulder of the shaft (SH); and
pressing the outer sleeve (1) so that the outer sleeve (1) and the bearing (BE) move in the axial direction (A) relative to the inner sleeve (2) and the bearing (BE) eventually bears against the axial boundary surface of the support ring (3) in the axial direction (A).

16. The mounting method according to Claim 15, wherein, when the outer sleeve (1) is pressed, hydraulic oil is supplied between the first conical surface (1s2) and the second conical surface (2s2) via an oil supply channel (1p) of the outer sleeve (1).

17. The mounting method according to Claim 15 or 16, wherein, after the bearing (BE) eventually bears against the axial support ring boundary surface of the support ring (3) in the axial direction (A), the locking nut (4) of the mounting and disassembling unit is mounted on the shaft (SH) against the outer sleeve (1).

18. The disassembling method for removing a bearing from a shaft using the mounting and disassembling unit according to Claim 6 or 7, comprising the steps of:
separating the outer sleeve (1) from the inner sleeve (2) when hydraulic oil is supplied to the oil supply channel (1p) of the outer sleeve (1) and removing the outer sleeve (1) from the shaft.

19. The disassembling method for removing a bearing from a shaft using the mounting and disassembling unit according to any one of Claims 1 to 11, comprising the steps of:
disassembling the outer sleeve (1) and the bearing (BE) from the shaft (SH) using a screw (TR) which passes through a locking nut (4) fastened to the shaft (SH) or a disassembly plate bearing against the shaft (SH) and is screwed into the first disassembly holes (1h3) of the outer sleeve (1); and
subsequently removing the inner sleeve (2) from the shaft (SH) using a screw (TR) which passes through the locking nut (4) or the disassembly plate and is screwed into the third disassembly holes (3h2) of the support ring (3).

20. The disassembling method according to Claim 18 or 19, wherein, while disassembling the inner sleeve (2) from the shaft (SH), hydraulic oil is supplied between the shaft (SH) and the inner sleeve (2) via the shaft oil supply channel (op) of the shaft (SH).

## Revendications

1. Unité de montage et de démontage pour le montage d'un palier (BE) sur un arbre (SH) et son démontage de l'arbre, l'unité comprenant les éléments suivants :
un manchon externe (1), la surface circonférentielle externe du manchon externe (1) étant réalisée avec une première surface de montage (1s1) pour le montage du palier (BE) et la surface circonférentielle interne du manchon externe (1) étant réalisée avec une première surface conique (1s2), qui s'étend jusqu'à une extrémité axiale du manchon externe (1) dans une direction axiale (A) de l'unité de montage et de démontage tout en s'étendant radialement vers l'extérieur ;
un manchon interne (2), la surface circonférentielle interne du manchon interne (2) étant réalisée avec une deuxième surface de montage (2s1) pour le montage sur l'arbre et la surface circonférentielle externe du manchon interne (2) étant réalisée avec une seconde surface conique (2s2) et une section filetée (21), qui se situe sur un côté d'extrémité axial de la seconde surface conique (2s2), la seconde surface conique (2s2) s'étend dans la direction axiale (A) jusqu'à l'autre extrémité axiale du manchon interne (2), tout en s'étendant radialement vers l'intérieur à partir de la section filetée (21), lorsque la seconde surface conique (2s2) se situe radialement vers l'intérieur et est en contact avec la première surface conique (1s2), le manchon interne (2) et le manchon externe (1) pouvant se déplacer l'un par rapport à l'autre dans la direction axiale (A) ; et
une bague de support (3) qui est vissée à la section filetée (21), la bague de support (3) et le manchon interne (2) pouvant se déplacer l'un par rapport à l'autre dans la direction axiale (A) tout en maintenant la liaison par vis.

2. Unité de montage et de démontage selon la revendication 1, l'unité de montage et de démontage comprenant en outre un écrou de blocage (4) qui est vissé à l'arbre (SH) pour définir une position axiale du manchon externe (1) par rapport à l'arbre (SH) au niveau de l'autre extrémité axiale du manchon externe (1).

3. Unité de montage et de démontage selon la revendication 2, l'unité de montage et de démontage comprenant en outre des boulons de blocage (5),
une surface circonférentielle interne de l'écrou de blocage (4) étant réalisée avec une rainure annulaire (4c) qui s'étend le long de la circonférence de l'unité de montage et de démontage ; l'écrou de blocage (4) reposant contre le manchon externe (1) lorsque l'unité de montage et de démontage est montée sur l'arbre (SH),
l'écrou de blocage (4) est réalisé avec des trous de montage (4h1) qui s'étendent dans la direction axiale (A) et à travers la rainure annulaire (4c), et les boulons de blocage (5) sont fixés dans les trous de montage (4h1) pour fixer une position axiale de l'écrou de blocage (4) par rapport à l'arbre (SH).

4. Unité de montage et de démontage selon l'une des revendications 1 à 3, dans laquelle le manchon externe (1) est réalisé avec une première structure à gradins, dont la surface de fond est la première surface de montage (1s1) ; et la première structure à gradins et la bague de support (3) définissent une position axiale du palier (BE).

5. Unité de montage et de démontage selon la revendication 4, dans laquelle la bague de support (3) est réalisée avec une seconde structure à gradins, dont la surface de fond est une troisième surface de montage (3s) pour supporter le palier (BE).

6. Unité de montage et de démontage selon l'une des revendications 1 à 5, dans laquelle la première surface conique (1s2) du manchon externe (1) est réalisée avec une rainure d'huile interne qui s'ouvre radialement vers l'intérieur, et en outre un canal d'alimentation en huile (1p) est réalisé à l'intérieur du manchon externe (1) qui est en liaison avec la rainure d'huile interne.

7. Unité de montage et de démontage selon la revendication 6, dans laquelle la rainure d'huile interne comprend une rainure d'huile circonférentielle (1c2) et une pluralité de rainures d'huile axiales (1c1) qui sont espacées les unes des autres le long de la circonférence de l'unité de montage et de démontage et s'étendent respectivement dans la direction axiale (A) ; et la rainure d'huile circonférentielle (1c2) s'étend en continu le long de la circonférence et est en liaison avec chacune des rainures d'huile axiales (1c1).

8. Unité de montage et de démontage selon l'une des revendications 1 à 7, dans laquelle la deuxième surface de montage (2s1) du manchon interne (2) est réalisée avec une pluralité de rainures (2c) qui sont espacées les unes des autres le long de la circonférence de l'unité de montage et de démontage, qui s'ouvrent respectivement radialement vers l'intérieur et s'étendent dans la direction axiale (A).

9. Unité de montage et de démontage selon l'une des revendications 1 à 8, dans laquelle la bague de support (3) est réalisée avec des trous de montage (3h1) qui la traversent dans la direction axiale (A) et sont dirigées vers une surface d'extrémité axiale du manchon interne (2),
l'unité de montage et de démontage comprend en outre des éléments de fixation (33) qui s'étendent à travers les trous de montage (3h1) et reposent contre la surface d'extrémité axiale du manchon interne (2) de sorte que le manchon interne (2) et la bague de support (3) sont fixés l'un par rapport à l'autre.

10. Unité de montage et de démontage selon la revendication 2 ou 3, dans laquelle le manchon externe (1) est réalisé avec des premiers trous de démontage (1h3) qui s'étendent dans la direction axiale (A), et l'écrou de blocage (4) est réalisé avec des deuxièmes trous de démontage (4h2) qui s'étendent à travers l'écrou de blocage (4) dans la direction axiale (A) et coïncident avec les premiers trous de démontage (1h3) ; et les deuxièmes trous de démontage (4h2) peuvent être alignés avec les premiers trous de démontage (1h3) en faisant tourner l'écrou de blocage (4) par rapport à l'arbre (SH).

11. Unité de montage et de démontage selon la revendication 10, dans laquelle la bague de support (3) est réalisée avec des troisièmes trous de démontage (3h2) qui s'étendent dans la direction axiale (A) ; et les deuxièmes trous de démontage (4h2) peuvent être alignés avec les troisièmes trous de démontage (3h2) en faisant tourner l'écrou de blocage (4) par rapport à l'arbre (SH).

12. Unité arbre et palier comprenant un arbre (SH), un palier (BE) et l'unité de montage et de démontage selon l'une des revendications 1 à 11, dans laquelle un manchon externe (1), un manchon interne (2) et une bague de support (3) de l'unité de montage et de démontage sont agencés au moins à certains endroits entre l'arbre (SH) et le palier (BE) et le montage et le démontage du palier (BE) sur/depuis l'arbre sont effectués à l'aide du dispositif de montage et de démontage.

13. Ensemble arbre et palier selon la revendication 12, dans lequel un canal d'alimentation en huile d'arbre (op) est réalisé à l'intérieur de l'arbre (SH), dans lequel une sortie d'huile est agencée dans une surface circonférentielle externe de l'arbre (SH) et est dirigée vers une deuxième surface de montage (2s1) du manchon interne (2).

14. Ensemble arbre et palier selon la revendication 12 ou 13, dans lequel l'arbre (SH) est réalisé avec un épaulement qui repose contre la bague de support (3) de sorte que l'épaulement limite axialement l'unité de montage et de démontage.

15. Procédé de montage pour le montage d'un palier mené sur un arbre à l'aide de l'unité de montage et de démontage selon l'une des revendications 1 à 11, comprenant les étapes :
fixation du palier (BE) sur une première surface de montage (1s1) du manchon externe (1) de manière emboîtée, de sorte qu'il repose contre une première structure à gradins du manchon externe (1) ;
insertion du manchon interne (2) dans le manchon externe (1) de sorte que la seconde surface conique (2s2) soit en contact avec la première surface conique (1s2) ;
liaison par vis de la bague de support (3) au manchon interne (2), définition d'une longueur de liaison par vis de la bague de support (3) et du manchon interne (2) pour obtenir un écart axial prédéterminé entre le palier (BE) et une surface de limitation axiale de bague de support de la bague de support (3), puis fixation de la bague de support (3) et du manchon interne (2) ;
fixation de l'unité constituée du manchon externe (1), du manchon interne (2), de la bague de support (3) et du palier (BE) sur l'arbre (SH) de manière emboîtée, de sorte que la bague de support (3) repose contre l'épaulement de l'arbre (SH) ; et
pression du manchon externe (1) de sorte que le manchon externe (1) et le palier (BE) se déplacent par rapport au manchon interne (2) dans la direction axiale (A) et enfin que le palier (BE) repose contre la surface de limitation axiale de la bague de support (3) dans la direction axiale (A).

16. Procédé de montage selon la revendication 15, dans lequel, lors de la pression sur le manchon externe (1), l'huile hydraulique est fournie entre la première surface conique (1s2) et la seconde surface conique (2s2) par le biais d'un canal d'alimentation en huile (1p) du manchon externe (1).

17. Procédé de montage selon la revendication 15 ou 16, dans lequel, après que le palier (BE) repose enfin contre la surface de limitation axiale de bague de support de la bague de support (3) dans la direction axiale (A), l'écrou de blocage (4) de l'unité de montage et de démontage est monté sur l'arbre (SH) contre le manchon externe (1).

18. Procédé de démontage pour le démontage d'un palier d'un arbre à l'aide de l'unité de montage et de démontage selon la revendication 6 ou 7, comprenant les étapes :
lorsque de l'huile hydraulique est fournie au canal d'alimentation en huile (1p) du manchon externe (1), séparation du manchon externe (1) du manchon interne (2) et démontage du manchon externe (1) de l'arbre.

19. Procédé de démontage pour le démontage d'un palier d'un arbre à l'aide de l'unité de montage et de démontage selon l'une des revendications 1 à 11, comprenant les étapes :
démontage du manchon externe (1) et du palier (BE) de l'arbre (SH) à l'aide d'une vis (TR) qui s'étend à travers un écrou de blocage (4) fixé sur l'arbre (SH) ou une plaque de démontage reposant contre l'arbre (SH) et qui est vissée dans les premiers trous de démontage (1h3) du manchon externe (1) ; et
ensuite démontage du manchon interne (2) de l'arbre (SH) à l'aide d'une vis (TR) qui s'étend à travers l'écrou de blocage (4) ou la plaque de démontage et est vissée dans les troisièmes trous de démontage (3h2) de la bague de support (3).

20. Procédé de démontage selon la revendication 18 ou 19, dans lequel, lors du démontage du manchon interne (2) de l'arbre (SH), l'huile hydraulique est fournie entre l'arbre (SH) et le manchon interne (2) par le biais du canal d'alimentation en huile d'arbre (op) de l'arbre (SH).
